# EUROPÄISCHE PATENTANMELDUNG

(11) **EP 2 873 596 A1**
(43) Veröffentlichungstag der Anmeldung: **20.05.2015**
(21) Anmeldenummer: 14192500.8
(22) Anmeldetag: 10.11.2014
(51) Int. Cl.: B62D 61/12, B62D 17/00, B60G 9/00, B60G 7/02

(54) **Achslift für eine Fahrzeugachse**

(30) Priorität: 18.11.2013 DE 102013112690
(71) Anmelder: BPW Bergische Achsen KG, 51674 Wiehl (DE)
(72) Erfinder: Luckau, Bianca, 53804 Much (DE); Michels, Manfred, 51067 Köln (DE)
(74) Vertreter: Bungartz Christophersen Partnerschaft mbB Patentanwälte

(57) **Zusammenfassung**

Vorgeschlagen wird ein Achslift für eine Fahrzeugachse, die an einem über einen Schwenkbolzen in einer fahrzeugfesten Stütze (2) gelagerten Achslenker geführt ist, mit zu beiden Seiten des Achslenkers zwischen diesem und Innenseiten der Stütze (2) angeordneten Distanzblechen (9), die jeweils mit einer Öffnung (39) für den Durchtritt des Schwenkbolzens versehen sind, und mit einem an einer in Bezug auf die Stütze (2) starr angeordneten Konsole (12) befestigten Kraftglied (11) mit einer durch Betätigung des Kraftglieds (11) gegen den Achslenker beweglichen Druckübertragung (20). Um erhöhte Querkräfte im Bereich der druckübertragenden Teile des Achslifts zu vermeiden, wird die Konsole (12) mit den Distanzblechen (9) verbunden.

Ferner vorgeschlagen wird ein entsprechendes Distanzblech (9), also ein Distanzblech zur Anordnung zwischen dem Achslenker und der Innenseite der fahrzeugfesten Stütze (2). Das Distanzblech (9) ist mit einer Öffnung (39) zur Aufnahme des Schwenkbolzens (6A) und mindestens einer weiteren Öffnung (38A, 38B) zur Befestigung des Achslifts versehen.

## Beschreibung

Die Erfindung betrifft einen Achslift für eine Fahrzeugachse, die an einem über einen Schwenkbolzen in einer fahrzeugfesten Stütze gelagerten Achslenker geführt ist, mit zu beiden Seiten des Achslenkers zwischen diesem und Innenseiten der Stütze angeordneten Distanzblechen, die jeweils mit einer Öffnung für den Durchtritt des Schwenkbolzens versehen sind, und mit einem an einer in Bezug auf die Stütze starr angeordneten Konsole befestigten Kraftglied mit einer durch Betätigung des Kraftglieds gegen den Achslenker beweglichen Druckübertragung.

Die Erfindung betrifft ferner ein Distanzblech zur Anordnung zwischen einem über einen Schwenkbolzen in einer fahrzeugfesten Stütze gelagerten Achslenker und der Innenseite der Stütze.

Bei Nutzfahrzeugen, für die solche Achslifte in erster Linie Anwendung finden, erfordern unterschiedliche Fahrzeugtypen auch unterschiedliche Fahrhöhen. Unter der Fahrhöhe versteht der Fachmann den über das Ventil der Luftfeder gehaltenen Abstand zwischen der Unterseite der Fahrzeuglängsträger, und dem Mittelpunkt der Fahrzeugachse. Im Programm eines Achsherstellers werden oftmals gleiche Achslenker mit unterschiedlich hohen Stützen und / oder unterschiedlich hohen Luftfederbälgen kombiniert. Dadurch fällt auch der Schwenkbereich des Achslenkers von Fahrwerk zu Fahrwerk unterschiedlich aus. Aufgrund dieser Randbedingungen sollte auch der Achslift in seinen für die Funktion maßgeblichen Maßen anpassbar sein.

Ein solcher Achslift mit einer fahrwerkspezifisch einstellbaren Achsliftkonsole ist aus der EP 0 961 726 B1 bekannt. Die als Kraftglied einen pneumatischen Membranzylinder tragende Konsole ist in mehreren verschiedenen Positionen an der Stütze montierbar. Hierzu weist die Konsole mehrere als Bohrungen gestaltete Öffnungen auf, durch welche wahlweise ein Bolzen hindurchführbar ist, um so die Konsole in einem bestimmten Winkel an der Stütze festzulegen.

Weitere Achshebevorrichtungen für Nutzfahrzeugachsen sind aus der WO 2012/126464 A1 und der EP 0 941 915 B1 bekannt.

Bei den bekannten Konstruktionen ist der Achslift so montiert, dass er genau in Längsrichtung der Stütze und damit in Fahrzeuglängsrichtung ausgerichtet ist. Im Rahmen der beim Fahrzeugbauer durchgeführten Spureinstellung am Achsaggregat kann es jedoch zu Situationen kommen, in denen der Achslenker nicht exakt in Fahrzeuglängsrichtung ausgerichtet ist, sondern z. B. unter einem leichten Winkel nach fahrzeugeinwärts oder fahrzeugauswärts. Die Spureinstellung erfolgt üblicherweise mittels an den beiden Stützen angeordneter Justiervorrichtungen. Befindet sich aber der Achslenker nicht genau in seiner Mittelstellung, können auch die an der Stütze angeordneten Teile des Achslifts nicht auf einen solchen Achslenker hin ausgerichtet sein mit der Folge, dass es beim Anheben der Fahrzeugachse zu erhöhten Querkräften an den druckübertragenden Teilen des Achslifts kommt.

Der Erfindung liegt daher die **Aufgabe** zugrunde, durch geeignete konstruktive Maßnahmen in den zuvor beschriebenen Fällen erhöhte Querkräfte im Bereich der druckübertragenden Teile des Achslifts zu vermeiden.

Zur **Lösung** dieser Aufgabe wird zunächst ein Achslift für eine Fahrzeugachse mit den Merkmalen des Patentanspruchs 1 vorgeschlagen.

Indem die das Kraftglied des Achslifts tragende Konsole nicht ausschließlich an der Stütze befestigt ist, sondern die Konsole zumindest auch mit den innerhalb der Stütze angeordneten Distanzblechen verbunden ist, folgen Lage und Ausrichtung der Konsole und damit auch des Achslifts der Lage und Ausrichtung des oberhalb angeordneten Achslenkers. Auf diese Weise werden erhöhte Querkräfte im Bereich der druckübertragenden Teile des Achslifts vermieden, unter anderem auch an der achslenkerseitigen Gegenfläche. Insgesamt wird daher beim Anheben der Fahrzeugachse eine Verbesserung und Vergleichmäßigung der Kraftübertragung auf den Achslenker erreicht.

Auch in Bezug auf eine spätere Nachrüstung an einem bereits vorhandenen Achsaggregat bietet die Lösung Vorteile. Durch die Befestigung der Achsliftkonsole an separaten Bauteilen, nämlich den in der Stütze angeordneten Distanzblechen, wird eine nachträgliche Montage des Achslifts auch unter solchen Stützen möglich, die von Haus aus nicht für eine Achsliftmontage vorbereitet sind. Bei den Distanzblechen wiederum, selbst wenn an diesen für ihre zusätzliche Funktion als Achsliftträger Änderungen erforderlich sind, handelt es sich um einfach herstellbare und damit preiswerte Bauteile, vorzugsweise aus gestanztem Blech. Eine Ausgestaltung des Achslifts ist gekennzeichnet durch zwei in Fahrzeuglängsrichtung zueinander beabstandete Befestigungen der Konsole, wobei die eine Befestigung die Verbindung mit den Distanzblechen ist, und die andere Befestigung eine vorzugsweise steckbare Formschlussverbindung zwischen der Konsole und der Stütze.

Vorzugsweise ist die Verbindung mit den Distanzblechen die in Fahrtrichtung hintere Verbindung. Die vorzugsweise in Fahrtrichtung vordere Verbindung, also die steckbare Formschlussverbindung, besteht aus einem an der Konsole ausgebildeten, sich über eine gewisse horizontale Länge erstreckenden Steck- oder Hakenelement und einer Öffnung in einer Stirnwand der Stütze.

Mit einer weiteren Ausgestaltung wird vorgeschlagen, dass die Konsole mittels einer durch Öffnungen in den Distanzblechen hindurchführenden Stange mit den Distanzblechen verbunden ist.

Des weiteren wird vorgeschlagen, dass sich die in dem Distanzblech vorhandene Öffnung nahe der Unterkante des Distanzblechs und auf einem Abschnitt des Distanzblechs befindet, der gegenüber dem unteren Rand der Stütze nach unten vorsteht.

Zur **Lösung** der oben genannten Aufgabe wird ferner ein entsprechendes Distanzblech vorgeschlagen, also ein Distanzblech zur Anordnung zwischen einem über einen Schwenkbolzen in einer fahrzeugfesten Stütze gelagerten Achslenker und der Innenseite der Stütze. Ein solches Distanzblech ist mit einer Öffnung zur Aufnahme des Schwenkbolzens versehen, und mit mindestens einer weiteren Öffnung zur Befestigung des Achslifts zum Anheben des Achslenkers.

Vorzugsweise sind die beiden stets paarweise verwendeten Distanzbleche identisch gestaltet. In diesem Fall weisen sie jeweils eine Öffnung vor, und eine Öffnung hinter der Öffnung für den Schwenkbolzen auf. Auf diese Weise lässt sich jedes der beiden Distanzbleche wahlweise auf der Innen- oder auf der Außenseite der Stütze verwenden. In Bezug auf diese Anwendungssymmetrie ist ferner von Vorteil, wenn die beiden Öffnungen jedes Distanzblechs gleiche Abstände zu der Öffnung für den Schwenkbolzen aufweisen.

Des weiteren wird vorgeschlagen, dass die Distanzbleche im Wesentlichen als Rechtecke gestaltet sind und die beiden Öffnungen im Bereich zweier benachbarter Ecken dieses Rechtecks angeordnet sind.

Weitere Einzelheiten und Vorteile der Erfindung ergeben sich aus der nachfolgenden Beschreibung eines Ausführungsbeispiels anhand der zugehörigen Zeichnungen. Darin zeigen:
- Figur 1: in einer perspektivischen Darstellung Teile einer luftgefederten Achsaufhängung einer Nutzfahrzeugachse einschließlich einer fahrzeugfesten Stütze, einem darin schwenkbar gelagerten Achslenker und einem Achslift, jedoch ohne Darstellung der Fahrzeugachse selbst;
- Fig. 2: die Gegenstände nach Fig. 1 aus anderer Perspektive und ohne den Achslenker;
- Fig. 3: ein erstes Konsolenteil des Achslifts in perspektivischer Darstellung
- Fig. 4a: in einer Seitenansicht das erste Konsolenteil sowie Distanzscheiben in einer möglichen Längsstellung an der Stütze;
- Fig. 4b: die Gegenstände nach Fig. 4 in einer anderen Längsstellung an der Stütze und
- Fig. 5: in Einzeldarstellung eines der der Befestigung des Achslifts dienenden Distanzbleche.

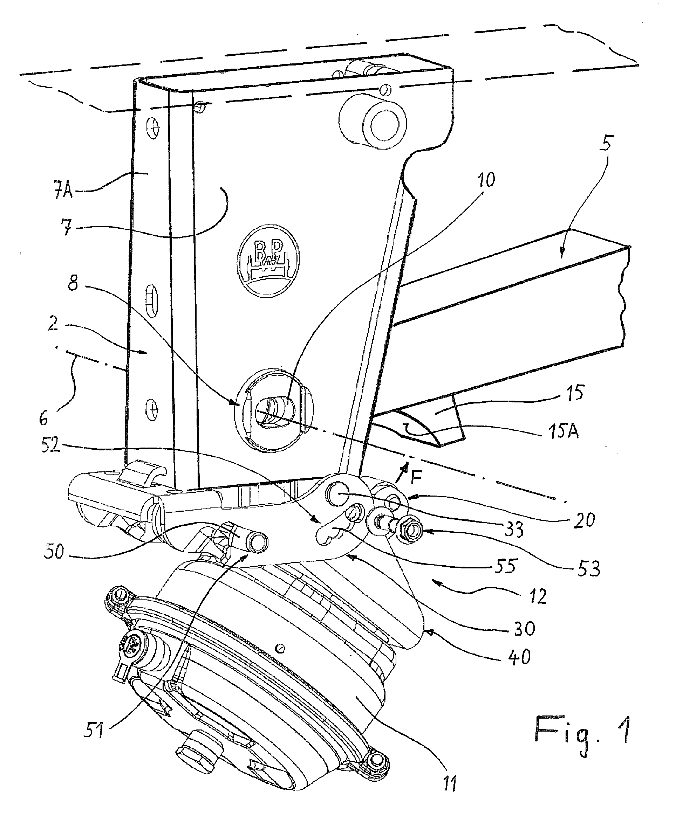

Die Fig. 1 zeigt Bestandteile einer Achsaufhängung eines Lkw-Anhängers oder -Aufliegers. Unter dem Fahrzeugrahmen sind links und rechts jeweils Stützen 2 befestigt, vorzugsweise durch Verschweißen mit der Unterseite der Längsträger des Fahrzeugrahmens. In jeder Stütze 2 ist, schwenkbar um einen quer durch die Stütze hindurchgeführten Schwenkbolzen, von dem in den Zeichnungen nur jeweils seine Achse 6 bezeichnet ist, ein Achslenker bzw. Längslenker 5 gelagert.

Das vordere Ende jedes Achslenkers 5 ist als Auge gestaltet, in dem eine Gummibuchse oder eine Gummi-Stahl-Buchse sitzt. Durch diese Buchse, durch zwei Distanzbleche 9 sowie durch zwei Seitenwände 7 der Stütze 2 hindurch erstreckt sich der die Schwenkachse 6 definierende Schwenkbolzen. Auf dem rückwärtigen Ende der Achslenker 5 sind jeweils, was die Zeichnung nicht zeigt, Luftfederbälge einer in üblicher Weise gestalteten Luftfederung befestigt. Üblicherweise stützen sich derartige Luftfederbälge von unten gegen den Fahrzeugrahmen ab.

Jeder Achslenker 5 ist in einer Achsaufnahme mit dem Achskörper der Fahrzeugachse verbunden. Der Achskörper, vorzugsweise ein Achsrohr, ist von der linken bis zur rechten Fahrzeugseite durchgehend gestaltet und trägt an seinen beiden Enden die Radlagerungen der Fahrzeugräder. Zur Einstellung der Spur des Achsaggregats ist jede Stütze 2 innen und außen mit jeweils einer Justiervorrichtung 8 versehen.

Der Grundkörper der Stütze 2 ist im Querschnitt U-förmig gestaltet und setzt sich aus den beiden zueinander im Wesentlichen parallelen Seitenwänden 7 und einer nach vorne in Fahrtrichtung weisenden Stirnwand 7A zusammen. Nach hinten und nach unten hin ist der Grundkörper der Stütze 2 offen. Sie kann in fertigungstechnisch vorteilhafter Ausgestaltung einteilig gestaltet sein, indem alle ihre Wände, also die beiden Seitenwände 7 und die vordere Stirnwand 7A, Abschnitte ein- und desselben Blechstreifens sind. Dieser Blechstreifen aus z. B. Stahlblech wird in einem Kaltumformprozess, z. B. in einem Stanz- oder Stanz-Biege-Prozess zu einem Blechformteil umgestaltet.

Jede der Seitenwände 7 ist mit der Justiervorrichtung 8 und mit einem zentralen, in Fahrzeuglängsrichtung angeordneten Langloch 10 versehen. Durch das Langloch 10, durch Löcher in den beiden Distanzblechen 9 sowie durch das Auge des Achslenkers 5 hindurch führt der Schwenkbolzen und bildet so die Schwenkachse 6 für den Achslenker 5. Die Form des Langlochs 10 ermöglicht in Verbindung mit hier nicht näher erläuterten Justierelementen ein leichtes Vor- oder Zurückverstellen des Schwenkbolzens innerhalb der Stütze 2.

Um die in Fig. 1 in der Fahrstellung dargestellte luftgefederte Fahrzeugachse, falls diese für den Fahrbetrieb nicht benötigt wird, in ihre angehobene Stellung zu heben, ist ein Achslift mit einer unter der Stütze 2 angeordneten Hebevorrichtung vorgesehen. Bestandteil der Hebevorrichtung ist ein z. B. mit Druckluft betriebener Membranzylinder 11, der mittels einer zweiteiligen Konsole 12, deren Einzelteile im Folgenden noch näher erläutert werden, starr an der Stütze 2 angeordnet ist. Die Konsole 12 ist mit einer Abstützung zur Befestigung des Membranzylinders 11 versehen. Bestandteile der Abstützung sind zu beiden Seiten einer Öffnung 13 der Konsole angeordnete Schrauben 16, die den Membranzylinder 11 starr an einem Konsolenteil 40 der Konsole 12 befestigen.

Gemäß Fig. 1 ist der Achslenker 5 an seiner Unterseite mit einem Kraftaufnahmeglied 15 versehen, an dem zur Aufnahme der Hebekraft eine Abrollfläche 15A ausgebildet ist. Das Kraftaufnahmeglied 15 ist z. B. mit einem Haken von unten her in eine Öffnung des Achslenkers 5 eingehängt, und mit einer Schraube gesichert.

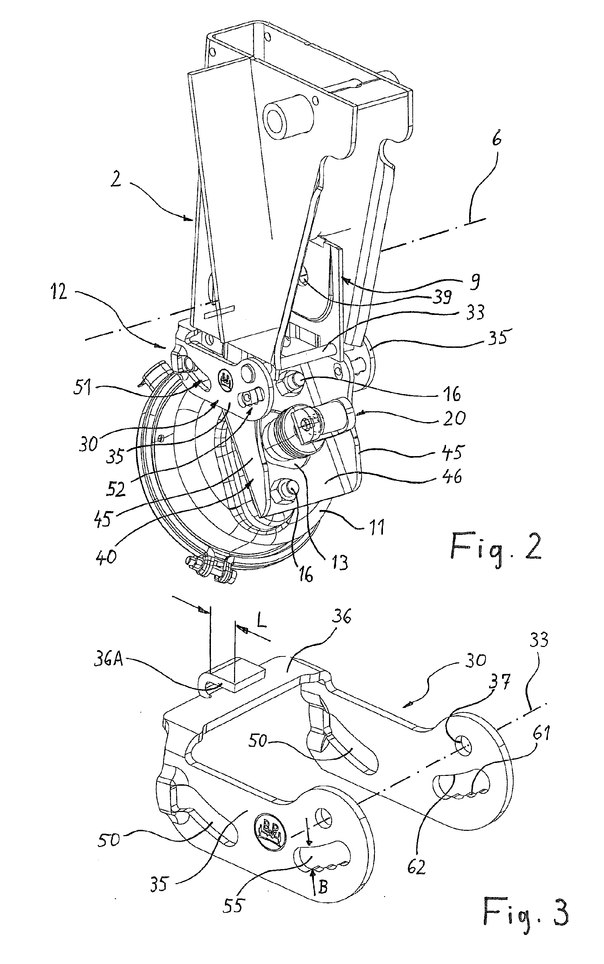

Das Kraftglied 11 des Achslifts ist der Membranzylinder. Sein Gehäuse ist mit Hilfe der Verschraubungen 16 starr an dem Konsolenteil 40 der Konsole 12 abstützt. Hierbei ragt ein Teil des Membranzylinders 11 durch die Öffnung 13 (Fig. 2) nach schräg oben. In diesem Bereich befindet sich eine Axialführung für eine aus dem Membranzylinder 11 heraus führende, durch das Druckmittel im Membranzylinder angetriebene Kolbenstange. An ihrem freien Ende ist die Kolbenstange mit einer wälzgelagerten Rolle 20 versehen (Fig. 2).

Bei Betätigung des Kraftglieds 11 mittels Druckluft kommt es durch die gemeinsam eine Druckübertragung bildende Baueinheit aus Kolbenstange und Rolle 20 zu einer nach schräg oben gerichteten Kraft F gegen das gegenüberliegende Kraftaufnahmeglied 15 an dem Achslenker 5. Dadurch wird der Achslenker 5 um seine Schwenkachse 6 nach oben geschwenkt, und die Achse angehoben.

Außerhalb des Achsliftbetriebs ist die aus der Kolbenstange und der Rolle 20 bestehende Druckübertragung in Richtung zum Membranzylinder 11 zurückgezogen, wodurch die Rolle 20 keinerlei Kontakt zu dem Kraftaufnahmeglied 15 hat und sich der Achslenker 5 entsprechend den Fahrbedingungen frei bewegen kann.

Die Abrollfläche 15A an dem Kraftaufnahmeglied 15 ist als zu der Rolle 20 hin konkav gekrümmte Evolvente gestaltet. Der Verlauf der Evolvente ist dergestalt, dass die Flächennormale jenes Ortes, an dem die Rolle 20 an der Abrollfläche 15A anliegt, exakt mit der Längsachse der Kolbenstange des Membranzylinders zusammenfällt. Durch diese Ausrichtung und geometrische Gestaltung der beteiligten Bauteile wird erreicht, dass keine oder allenfalls sehr geringe Querkräfte auf die Kolbenstange ausgeübt werden. Gleichwohl kann es sinnvoll sein, die Kolbenstange axial zu führen, wozu nahe dem Austritt der Kolbenstange aus dem Gehäuse des Membranzylinders 11 eine Axialführung vorgesehen sein kann.

Die Konsole 12 des Achslifts ist zweiteilig. Sie besteht im Wesentlichen aus einem ersten Konsolenteil 30 und dem bereits genannten zweiten Konsolenteil 40. Das erste Konsolenteil 30 überträgt die mit dem Anheben der Achse verbundenen Reaktionskräfte teils unmittelbar auf die Stütze, und teils mittelbar über den Schwenkbolzen. Das zweite Konsolenteil 40, an dem der Membranzylinder und damit das Kraftglied 11 des Achslifts befestigt ist, ist an dem ersten Konsolenteil 30 in unterschiedlichen Stellungen befestigbar.

Das erste Konsolenteil 30 besteht aus einem in Fig. 3 für sich allein dargestellten Blechformteil, und der in Fig. 2 erkennbaren Stange 33. In Bezug auf die Stütze 2 ist das Konsolenteil 30 an zwei horizontal zueinander beabstandeten Orten befestigt.

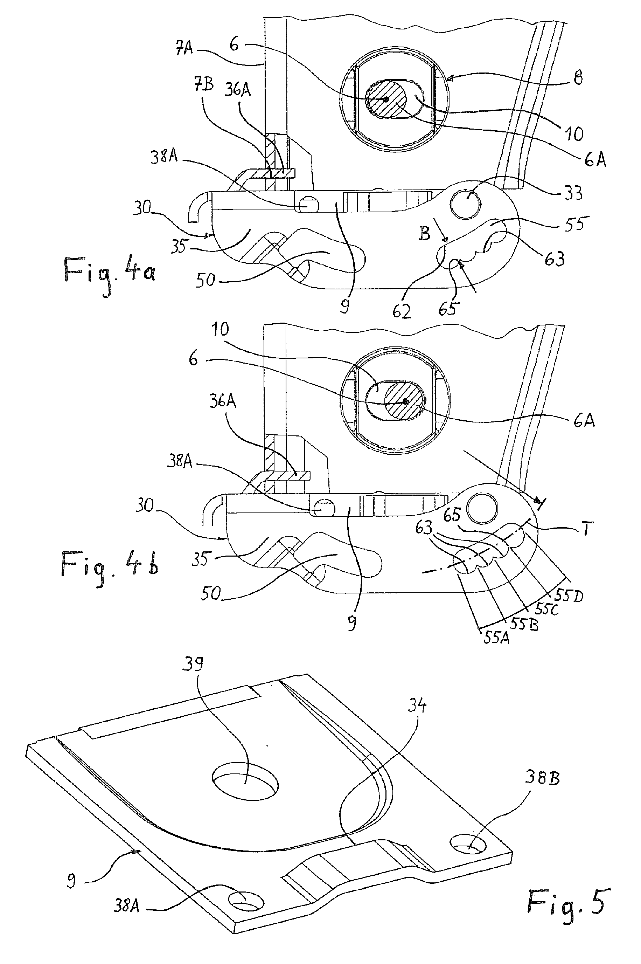

Als in Fahrtrichtung vordere Befestigung dient eine steckbare Formschlussverbindung, hier ausgeführt als eine Steck- oder Hakenverbindung zum unmittelbaren Eingriff in die Stirnwand 7A der Stütze. Seitens des ersten Konsolenteils 30 ist Bestandteil dieser Verbindung ein in Fahrtrichtung vorne an dem Konsolenteil ausgebildetes Hakenelement 36A, welches sich im Wesentlichen horizontal über eine Länge L erstreckt (Fig. 3). Auf diese Weise lässt sich das Hakenelement 36A durch horizontales Stecken in eine Öffnung 7B (Fig. 4a) einführen, die sich im unteren Bereich der Stirnwand 7A der Stütze 2 befindet und bis auf notwendige Toleranzen in etwa den Querschnitt des Hakenelements 36A aufweist.

In der Öffnung 7B ist das Hakenelement 36A daher zur Seite und nach oben und unten verriegelt, hingegen in Richtung seiner Länge L (Fig. 3) frei beweglich angeordnet. Die Querschnitte von Hakenelement 36A und Öffnung 7B sind vorzugsweise rechteckig oder oval, mit längerer horizontaler als vertikaler Erstreckung.

Das Blechformteil des Konsolenteils 30 setzt sich aus zwei Seitenwänden 35 und einem diese verbindenden Stegabschnitt 36 zusammen, der sich quer unter der Stütze 2 hindurch erstreckt. An dem Stegabschnitt 36 ist einstückig das Steck- oder Hakenelement 36A angeformt.

Die Druckreaktionskräfte beim Betätigen des Achslifts werden vorne über die Steck- und Hakenverbindung 36A, und hinten über die andere, horizontal beabstandete Befestigung abgeleitet.

Die hintere Befestigung erfolgt mittels der Stange 33, die hierzu sowohl als Rundlöcher gestaltete Öffnungen 37 in den beiden Seitenwänden 35 des ersten Konsolenteils 30, als auch eine ebenfalls als Rundloch gestaltete Öffnung 38A, 38B in dem jeweiligen Distanzblech 9 durchragt. Die beiden Distanzbleche 9 haben daher die Funktion eines Trägers für den Achslift. Die Stange 33 ist zu ihrer axialen Sicherung an ihrem einen Ende mit einem erweiterten Kopf und an ihrem anderen Ende mit einer Ringnut für einen Sicherungsclip versehen.

Die Fig. 2 zeigt die Distanzbleche innerhalb der Stütze, und Fig. 5 die genaue Gestalt des Distanzblechs. Die zwei Distanzbleche 9 sind identisch gestaltet, sie lassen sich also jeweils wahlweise auf der inneren oder der äußeren Seite der jeweiligen Stütze 2 anordnen.

Im Rahmen der Erfindung haben die Distanzbleche 9, die zu beiden Seiten des Achslenkers 5 zwischen diesem und den jeweiligen Innenseiten der Seitenwände 7 der Stütze angeordnet sind, zwei Funktionen:
Im Rahmen der Montage des Achsaggregats erleichtern die inneren und äußeren Distanzbleche 9 das Einsetzen bzw. Einfügen des Achslenkers 5 in die Stütze 2, wozu die Distanzbleche, wie dies Fig. 5 erkennen lässt, leicht keilförmig gestaltet sein können. Dazu werden beim Einsetzen des Achslenkers 5 in den Raum zwischen den beiden Seitenwänden 7 der Stütze Distanzbleche 9 von geeigneter Dicke verwendet. Diese werden von unten her in den Spalt zwischen Achslenker 5 und Stütze 2 eingesetzt. Die Distanzbleche tragen auch zum Einstellen des seitlichen Spiels des Achslenkers innerhalb der Stütze bei, da aus Gründen der Fertigungsgenauigkeit die Breite des Achslenkers und ebenso die Innenbreite der Stütze produktionstechnischen Schwankungen unterliegen. Etwaiges seitliches Spiel kann daher durch die Materialdicke der Distanzbleche 9 überbrückt bzw. ausgefüllt werden.

Eine weitere Funktion der inneren und äußeren Distanzbleche 9 besteht darin, die Konsole 12 in ihrem rückwärtigen Bereich zu befestigen, damit den Achslift zu tragen und zumindest einen Teil der Reaktionskräfte zu übernehmen und gegebenenfalls über den Schwenkbolzen auf die Stütze 2 abzuführen.

Die Distanzbleche 9 sind in ihrer Mitte mit einer runden Öffnung 39 versehen, deren Durchmesser, bis auf das für die Montage erforderliche Spiel, dem Durchmesser des dort hindurchführenden Schwenkbolzens entspricht. Wird mittels der Justiervorrichtungen 8 durch horizontale Lageveränderung des Schwenkbolzens die Spur des Achsaggregats eingestellt, wofür über die horizontalen Langlöcher 10 in der Stütze 2 ein entsprechender Verstellbereich zur Verfügung steht, führt jede horizontale Lageveränderung des Schwenkbolzens zu einem gleich großen Mitnehmen der beiden Distanzbleche 9. Da die Konsole 12 an beiden Distanzblechen 9 befestigt ist, folgt daher die Ausrichtung der Konsole 12 und damit die Ausrichtung des Achslifts der Spureinstellung des Achsaggregats.

Dies hat den Vorteil, dass der Achslift, ungeachtet der vorgenommenen Spureinstellung, weitgehend in Ausrichtung zur Ausrichtung des Achslenkers 5 arbeitet, und Querkräfte zwischen der Rolle 20 und der achslenkerseitigen Abrollfläche 15A minimiert werden. Es kommt während des Achsliftbetriebs zu einer Verbesserung und Vergleichmäßigung des Abrollens der Rolle 20 an der achslenkerseitigen Abrollfläche 15A.

Gemäß Fig. 2 und Fig. 5 ist jedes Distanzblech 9 im Wesentlichen als Rechteck gestaltet, wobei ein Abschnitt des Distanzblechs nach unten über den unteren Rand der Seitenwand 7 hinaus vorsteht. Auf diesem Abschnitt befinden sich die Öffnungen 38A, 38B für die Stange 33, die somit freiliegen mit der Folge, dass die Stange 33 ohne weiteres durch eines der Löcher bzw. Öffnungen 38A, 38B hindurchgeführt werden kann. Die beiden Öffnungen 38A, 38B befinden sich hierzu im Bereich der zwei benachbarten, unteren Ecken des Rechtecks. Sie sind symmetrisch zu der mittigen Öffnung 39 für den Schwenkbolzen angeordnet.

Die Distanzbleche 9 sind außerdem nahe ihres unteren Randes mit einem nach außen vorspringenden Ansatz versehen, der eine horizontale Anlagekante 34 bildet. Die Anlagekante 34 liegt, wenn der Schwenkbolzen das zentrale Loch 39 des Distanzblechs 9 durchdringt, von unten gegen den unteren Rand der jeweiligen Seitenwand 7 an, oder hat nur einen geringen Höhenabstand zu diesem unteren Rand.

Die Befestigung des Konsolenteils 30 gegenüber der Stütze 2 erfolgt, indem zunächst das Konsolenteil 30 nach hinten bewegt wird, bis das Hakenelement 36A in die Öffnung 7B in der Stirnwand 7A gelangt. Sodann werden, etwa durch leichtes Anheben des Konsolenteils 30, dessen Löcher 37 mit den hinteren Löchern 38A, 38B in den Distanzblechen 9 in Deckung gebracht. Die Stange 33 wird dann hindurchgeführt, und mittels des Sicherungsclips axial gesichert.

Die vorderen Verbindungsmittel in Gestalt der Steck- oder Hakenverbindung 36A können sich nicht lösen, da die hinteren Verbindungsmittel in Gestalt der Stange 33 und der runden Löcher 37, 38A, 38B keine nennenswerte horizontale Bewegung des ersten Konsolenteils 30 relativ zu den Distanzblechen 9 zulassen, wozu eine entsprechend geringe Toleranz der Stange 33 und der Löcher 37, 38A, 38B durch die sie hindurchführt, erforderlich ist.

Die Figuren 4a und 4b zeigen im Rahmen der Spureinstellung des Achsaggregats die beiden Maximalstellungen des horizontalen Verstellbereichs des hier im Schnitt wiedergegebenen Schwenkbolzens 6A. Dargestellt ist insbesondere, dass die horizontale Länge L (Fig. 3) des Hakenelements 36A so bemessen ist, dass sich das Hakenelement 36A stets und selbst bei maximaler Ausnutzung des horizontalen Verstellbereichs des Schwenkbolzens 6A noch in der Öffnung 7B befindet und darin seitlich und nach oben und unten gehalten wird.

Auch das zweite, verstellbare Konsolenteil 40 besteht im Wesentlichen aus einem einstückigen Blechformteil, welches sich aus zwei zueinander parallelen Seitenwänden 45 und einem diese miteinander verbindenden Stegabschnitt 46 zusammensetzt, wobei sich der Membranzylinder 11 mittels der Verschraubungen 16 an diesem Stegabschnitt 46 abstützt.

Um das zweite Konsolenteil 40 in einer bestimmten, aus mehreren wahlweise zur Verfügung stehenden Stellungen am ersten Konsolenteil 30 befestigen zu können und so die Anhebegeometrie des Achslifts an die jeweilige Fahrwerksgeometrie anzupassen, sind die Seitenwände 35, 45 mit Öffnungen versehen, die nachfolgend näher beschrieben werden.

Bestandteil des zweiten Konsolenteils 40 sind an beiden Seitenwänden 45 angeformte, als Zapfen 44 ausgebildete Durchstellungen, die stets in ein Langloch 50 in der jeweiligen Seitenwand 35 des ersten Konsolenteils 30 eingreifen. Die Langlöcher 50 sind, wie die Figuren 3, 4a und 4b erkennen lassen, nicht gerade, sondern sie folgen einem Kreisbogen, dessen Kreismittelpunkt ungefähr mit der Bolzenachse 6 zusammenfällt. Die Zapfen 44 bilden gemeinsam mit den Langlöchern 50, in die sie eingreifen, eine erste, in Fahrzeuglängsrichtung vordere Befestigung 51 des zweiten mit dem ersten Konsolenteils.

Als in Fahrzeuglängsrichtung hintere Befestigung des zweiten Konsolenteils 40 an dem ersten Konsolenteil 30 dienen Verschraubungen 52 auf beiden Seiten der Konsole. Hierzu ist auf jeder Seite der Konsole eine Schraube 53 sowohl durch eine längliche Öffnung 55 in der Seitenwand 35 des ersten Konsolenteils 30, als auch durch eine runde Öffnung in der Seitenwand 45 des zweiten Konsolenteils 40 geführt. Durch Anziehen der jeweiligen Schraube 53 werden die Seitenwände 35, 45 gegeneinander gespannt, so dass die Konsolenteile 30, 40 auf beiden Seiten spielfrei verbunden sind.

Die zwei länglichen Öffnungen 55 in dem ersten Konsolenteil 30 weisen jeweils einen ersten, der Stütze entfernteren Längsrand 61 auf, und einen zweiten Längsrand 62, der der Stütze näher liegt. Während der zweite Längsrand 62 im Wesentlichen eine kontinuierliche Bogenform beschreibt, weist der erste Längsrand 61 eine segmentierte Kontur auf, so dass auch die längliche Öffnung 55 insgesamt eine Segmentierung mit aufeinanderfolgenden Längsabschnitten 55A, 55B, 55C, 55D aufweist.

Die Segmentierung besteht in einander abwechselnden verengten Abschnitten 65 und erweiterten Abschnitten 63. An den verengten Abschnitten 65 sind benachbarte Längsabschnitte 55A, 55B, 55C, 55D zueinander hin offen, stehen also in Verbindung miteinander. Auf den verengten Abschnitten 65 ist die verbleibende Breite B der Öffnung 55 mindestens gleich groß und vorzugsweise etwas größer als der Schaft- bzw. Gewindedurchmesser der Schraube 53. Auf diese Weise lässt sich die Schraube 53 direkt zwischen den einzelnen Längsabschnitten 55A, 55B, 55C, 55D versetzen, ohne dass es erforderlich ist, hierzu die Schraube 53 zunächst komplett aus der Öffnung herauszuziehen.

Auf den erweiterten Abschnitten 63 ist der Längsrand 61 jeweils als ein zu der Öffnung 55 hin gebogenes Kreissegment gestaltet, dessen Kreisradius vorzugsweise gleich dem halben Schaft- bzw. Gewindedurchmesser der Schraube 53 ist. Der Schaft bzw. das Gewinde der im Achsliftbetrieb stark belasteten Schraube 53 kann sich daher entlang einer gewissen Fläche an den Längsrand 61 anlegen, so dass sich die Druckbelastung im Kontaktbereich in Grenzen hält.

Gemäß den Figuren 3, 4a und 4b erstrecken sich die zwei länglichen Öffnungen 55 im Wesentlichen parallel zur Bewegungsrichtung der Druckübertragung, d. h. zur Bewegungsrichtung der Rolle 20. Die aufeinanderfolgenden Längsabschnitte 55A, 55B, 55C, 55D liegen auf einem Teilkreis T, dessen Kreismittelpunkt mit der Bolzenachse 6 zusammenfällt.

Auch in Bezug auf eine spätere Nachrüstung an einem bereits vorhandenen Achsaggregat bietet die Lösung Vorteile. Durch die Befestigung der Achsliftkonsole 12 an separaten Bauteilen, nämlich den in der Stütze angeordneten Distanzblechen 9, wird eine nachträgliche Montage des Achslifts auch unter solchen Stützen möglich, die von Haus aus nicht für eine Achsliftmontage vorbereitet sind. Bei den Distanzblechen 9 wiederum, selbst wenn an diesen für ihre zusätzliche Funktion als Achsliftträger Änderungen erforderlich sind, handelt es sich um einfach herstellbare und damit preiswerte Bauteile, vorzugsweise aus gestanztem und verformtem Blech.

Die Einstellung des Achslifts kann auch nachträglich und insbesondere im Rahmen einer späteren Nachrüstung an einem vorhandenen Achsaggregat erfolgen. Die Einstellung erfolgt dann zum Beispiel individuell durch den Fahrzeugbauer, nachdem das erste Konsolenteil 30 zunächst in seiner nicht veränderbaren Grundstellung an der Stütze 2 montiert wurde. Alternativ besteht die Möglichkeit, schon vor der Anbringung des Achslifts an der Stütze die beiden Konsolenteile in einer bestimmten Relativstellung zu verbinden, die für den jeweiligen Fahrwerkstyp passend ist. Die so vorbereitete Konsole 12 aus den beiden Konsolenteilen 30, 40 wird dann als Einheit unter der Stütze 2 befestigt, ohne dass es dabei noch zu einer versehentlichen Fehlmontage kommen kann.

### Bezugszeichenliste

- 2: Stütze
- 5: Achslenker (Längslenker)
- 6: Achse des Schwenkbolzens
- 6A: Schwenkbolzen
- 7: Seitenwand
- 7A: Stirnwand
- 8: Justiervorrichtung
- 9: Distanzblech
- 10: Langloch
- 11: Kraftglied, Membranzylinder
- 12: Konsole
- 13: Öffnung
- 15: Kraftaufnahmeglied
- 15A: Abrollfläche
- 16: Schraube
- 20: Rolle
- 30: erstes Konsolenteil
- 33: Stange
- 34: Anlagekante
- 35: Seitenwand
- 36: Stegabschnitt
- 36A: Steck- bzw. Hakenverbindung
- 37: Öffnung, Loch
- 38A: Öffnung, Loch
- 38B: Öffnung, Loch
- 39: Öffnung, Loch
- 40: zweites Konsolenteil
- 44: Zapfen
- 45: Seitenwand
- 46: Stegabschnitt
- 50: Langloch
- 51: vordere Befestigung
- 52: hintere Befestigung, Verschraubung
- 53: Schraube
- 55: längliche Öffnung
- 55A: Längsabschnitt
- 55B: Längsabschnitt
- 55C: Längsabschnitt
- 55D: Längsabschnitt
- 61: Längsrand
- 62: Längsrand
- 63: erweiterter Abschnitt
- 65: verengter Abschnitt

- B: Öffnungsbreite
- L: Länge
- F: Druckkraft
- T: Teilkreis

## Patentansprüche

1. Achslift für eine Fahrzeugachse, die an einem über einen Schwenkbolzen in einer fahrzeugfesten Stütze (2) gelagerten Achslenker geführt ist, mit zu beiden Seiten des Achslenkers zwischen diesem und Innenseiten der Stütze (2) angeordneten Distanzblechen (9), die jeweils mit einer Öffnung (39) für den Durchtritt des Schwenkbolzens (6A) versehen sind, und mit einem an einer in Bezug auf die Stütze (2) starr angeordneten Konsole (12) befestigten Kraftglied (11) mit einer durch Betätigung des Kraftglieds (11) gegen den Achslenker beweglichen Druckübertragung (20), **dadurch gekennzeichnet, dass** die Konsole (12) mit den Distanzblechen (9) verbunden ist.

2. Achslift nach Anspruch 1, **gekennzeichnet durch** zwei in Fahrzeuglängsrichtung zueinander beabstandete Befestigungen der Konsole (12), wobei die eine Befestigung die Verbindung mit den Distanzblechen (9) ist, und die andere Befestigung eine vorzugsweise steckbare Formschlussverbindung zwischen der Konsole (12) und der Stütze (2).

3. Achslift nach Anspruch 2, **dadurch gekennzeichnet, dass** die Verbindung mit den Distanzblechen (9) die in Fahrtrichtung hintere Verbindung ist.

4. Achslift nach Anspruch 2 oder 3, **dadurch gekennzeichnet, dass** die Formschlussverbindung aus einem an der Konsole (12) ausgebildeten Steck- oder Hakenelement (36A) und einer Öffnung (7B) in einer Stirnwand (7A) der Stütze (2) besteht.

5. Achslift nach Anspruch 4, **dadurch gekennzeichnet, dass** sich das Steck- oder Hakenelement (36A) über eine gewisse horizontale Länge (L) erstreckt.

6. Achslift nach einem der vorangehenden Ansprüche, **dadurch gekennzeichnet, dass** die Konsole (12) mittels einer durch Öffnungen (38A, 38B) in den Distanzblechen (9) hindurchführenden Stange (33) mit den Distanzblechen (9) verbunden ist.

7. Achslift nach Anspruch 6, **dadurch gekennzeichnet, dass** sich die Öffnung (38A bzw. 38B) auf einem Abschnitt des Distanzblechs (9) befindet, der gegenüber dem unteren Rand der Stütze (2) nach unten vorsteht.

8. Achslift nach Anspruch 6 oder 7, **dadurch gekennzeichnet, dass** die Distanzbleche (9) identisch gestaltet sind und jeweils eine Öffnung (38A bzw. 38B) vor, und eine Öffnung (38B bzw. 38A) hinter der Öffnung (39) für den Schwenkbolzen aufweisen.

9. Achslift nach Anspruch 8, **dadurch gekennzeichnet, dass** die beiden Öffnungen (38A, 38B) jedes Distanzblechs (9) gleiche Abstände zu der Öffnung (39) für den Schwenkbolzen aufweisen.

10. Achslift nach Anspruch 8 oder 9, **dadurch gekennzeichnet, dass** die Distanzbleche im Wesentlichen als Rechtecke gestaltet sind und die beiden Öffnungen (38A, 38B) im Bereich zweier benachbarter Ecken des Rechtecks angeordnet sind.

11. Distanzblech (9) zur Anordnung zwischen einem über einen Schwenkbolzen (6A) in einer fahrzeugfesten Stütze (2) gelagerten Achslenker und der Innenseite der Stütze (2), mit einer Öffnung (39) zur Aufnahme des Schwenkbolzens (6A) und mindestens einer weiteren Öffnung (38A, 38B) zur Befestigung eines Achslifts zum Anheben des Achslenkers.

12. Distanzblech nach Anspruch 11, **dadurch gekennzeichnet, dass** die mindestens eine weitere Öffnung (38A, 38B) nahe der Unterkante des Distanzblechs (9) angeordnet ist.
